(19) Europäisches Patentamt
European Patent Office
Office européen des brevets

(11) **EP 3 795 935 B1**

(12) **FASCICULE DE BREVET EUROPEEN**

(45) Date de publication et mention de la délivrance du brevet:
**08.03.2023 Bulletin 2023/10**

(21) Numéro de dépôt: **20197026.6**

(22) Date de dépôt: **18.09.2020**

(51) Classification Internationale des Brevets (IPC):
**F27B 5/04** *(2006.01)*   **F27B 5/08** *(2006.01)*
**F27B 17/02** *(2006.01)*   **F27D 1/00** *(2006.01)*
**G01N 5/04** *(2006.01)*   **F27B 5/06** *(2006.01)*

(52) Classification Coopérative des Brevets (CPC):
**F27B 5/08; F27B 5/04; F27B 17/02; F27D 1/0006; F27D 1/0033; F27D 1/0036; G01N 5/04;** F27B 2005/064

(54) **DISPOSITIF DE TRAITEMENT THERMIQUE PRESENTANT UNE RESISTANCE AU VIEILLISSEMENT AMELIOREE ET PROCEDE DE TRAITEMENT THERMIQUE LE METTANT EN OEUVRE**

VORRICHTUNG ZUR WÄRMEBEHANDLUNG MIT EINER VERBESSERTEN ALTERUNGSBESTÄNDIGKEIT, UND DIESE VORRICHTUNG EINSETZENDES WÄRMEBEHANDLUNGSVERFAHREN

DEVICE FOR HEAT TREATMENT HAVING AN IMPROVED AGEING RESISTANCE AND METHOD FOR HEAT TREATMENT IMPLEMENTING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.09.2019 FR 1910402**

(43) Date de publication de la demande:
**24.03.2021 Bulletin 2021/12**

(73) Titulaire: **Commissariat à l'énergie atomique et aux énergies alternatives**
**75015 Paris (FR)**

(72) Inventeurs:
• **VAUDEZ, Stéphane**
**84000 AVIGNON (FR)**
• **BROTHIER, Méryl**
**13126 VAUVENARGUES (FR)**

(74) Mandataire: **Brevalex**
**Tour Trinity**
**1 Bis Esplanade de La Défense**
**CS 60347**
**92035 Paris La Défense Cedex (FR)**

(56) Documents cités:
**WO-A1-2004/079284    WO-A1-2015/037408**
**US-A1- 2003 057 615**

**Description**

**Domaine technique**

La présente invention s'inscrit dans le domaine du traitement thermique, que ce soit pour la réalisation d'une analyse thermique, telle qu'une analyse thermogravimétrique (ATG), une analyse thermique différentielle (ATD) ou une analyse dilatométrique, pour la réalisation d'un traitement thermique, par exemple un frittage, ou pour la réalisation d'un traitement thermochimique.

La présente invention se rapporte plus particulièrement à un dispositif de traitement thermique convenant pour la mise en oeuvre de l'analyse thermique ou du traitement thermique ou thermochimique considéré, ce dispositif de traitement thermique, tel qu'un four, présentant une résistance au vieillissement améliorée.

La présente invention se rapporte également à un procédé de traitement thermique d'un échantillon, ce procédé mettant en oeuvre le dispositif de traitement thermique mentionné précédemment.

**État de la technique antérieure**

Les traitements thermiques tels que l'analyse thermique et le traitement thermique ou thermochimique d'un échantillon de matière sont classiquement réalisés dans des dispositifs de traitement thermique, couramment appelés fours.

Ces dispositifs, comme décrits dans l'état de l'art US 2003/057615 A1, WO 2015/037408 A1 et WO 2004/079284 A1, ont tous en commun de comprendre une enceinte dans laquelle sont disposées une résistance de chauffe et une pièce interne (également dénommée "interne"), ces deux éléments étant typiquement cylindriques. La résistance de chauffe est placée autour de la pièce interne qui délimite une chambre destinée à recevoir l'échantillon de matière à traiter ou à analyser thermiquement.

Il existe toutefois un grand nombre de variantes de fours en fonction des matériaux qui forment la résistance de chauffe, d'une part, et la pièce interne, d'autre part.

Une première variante est constituée par les fours dits "fours céramique/graphite". De tels dispositifs comprennent une résistance de chauffe en graphite et une pièce interne en céramique, classiquement en alumine ou en mullite. Pour atteindre des températures de chauffe importantes, classiquement supérieures ou égales à 1500 °C et pouvant même dépasser 1800 °C, voire 2000 °C, l'enceinte du four est placée sous une atmosphère comprenant un gaz inerte, typiquement de l'argon, de manière à protéger la résistance de chauffe. Ces fours céramique/graphite conviennent pour un bon nombre d'applications. Toutefois, on observe que la mise en oeuvre concomitante de températures élevées et de conditions d'atmosphère très réductrices, ou bien très oxydantes, conduit à un vieillissement prématuré des pièces internes en céramique et/ou des résistances de chauffe en graphite.

Il existe une deuxième variante de fours dits "fours tout métalliques" qui permettent de remédier, au moins en partie, au vieillissement prématuré des pièces des fours céramique/graphite. Comme leur nom l'indique, ces fours comprennent des pièces internes et des résistances de chauffe uniquement constituées de métaux réfractaires tels que le tungstène et le molybdène. S'ils peuvent fonctionner dans des conditions d'atmosphère très réductrices, de tels fours ne conviennent toutefois pas pour la mise en oeuvre de conditions d'atmosphère très oxydantes qui ont pour effet d'oxyder les métaux employés et, partant, d'affecter les performances ainsi que la durée de vie de ces fours. De plus, il n'est pas possible de maîtriser, de manière précise, le potentiel oxygène qui est un paramètre primordial dans certains traitements thermiques. En effet, dans certains cas, c'est le couple oxydant/réducteur $MO_x/MO$, avec M représentant le métal constitutif de la pièce interne, O l'oxygène et $x > 1$, qui impose le potentiel oxygène. Lorsque la pièce interne est en molybdène, l'oxydation de ce métal peut conduire au relargage de dioxygène au cours du traitement thermique, ce qui vient perturber la pression partielle de dioxygène et peut être rédhibitoire pour des traitements thermiques qui requièrent une maîtrise fine d'une telle pression partielle.

Une troisième variante de fours permet de maîtriser, de manière satisfaisante, cette pression partielle de dioxygène. Il s'agit des fours dits "fours céramique/métal" dans lesquels les résistances de chauffe sont métalliques (tungstène, molybdène,...) et les pièces internes en céramique. Bien que convenant pour de nombreux traitements thermiques, ce type de fours s'avère relativement coûteux en termes d'investissement mais aussi de fonctionnement. En effet, des conditions de traitement thermique, conduites à de hautes températures avec, le cas échéant, des cycles thermiques de montées et de descente en température, et dans des conditions d'atmosphère souvent oxydantes, fragilisent les résistances métalliques qui doivent donc être fréquemment remplacées.

La quatrième variante de fours dits "fours céramique/SiC" peut être rapprochée de la première variante dans le sens où ces fours ont une structure similaire à celle des fours céramique/graphite, à l'exception de la résistance de chauffe qui n'est pas en graphite mais en carbure de silicium SiC. Le carbure de silicium s'oxydant moins que le graphite dans les mêmes conditions opératoires, cette quatrième variante de fours permet de ne pas recourir pas à la mise en oeuvre d'un gaz inerte. En revanche, les résistances en SiC ne permettent pas d'atteindre les températures très élevées qui peuvent, par contre, être atteintes avec les résistances en graphite. Comme les fours céramique/graphite, les fours céramique/SiC conviennent pour un bon nombre d'applications. Mais ces fours céramique/SiC ne permettent toutefois pas de réaliser des traitements thermiques à très haute température (typiquement à des températures supérieures ou égales à 1500 °C), ni de maîtriser, de manière précise, le potentiel oxygène au voisinage des échantillons de matière soumis au traitement thermique sans un vieillissement prématuré des pièces internes en céramique et/ou des résistances de chauffe en SiC.

Une cinquième variante de fours dits "fours spécifiques à protection des internes" est proposée. De tels fours disposent de pièces internes en céramique à la surface externe desquelles est déposée une couche de protection métallique. Toutefois, ces fours à protection des internes n'est pas adaptée pour des traitements thermiques conduits à haute température, en raison des dilatations différentielles non négligeables qui sont générées entre la pièce interne en céramique et la couche de protection métallique déposée, ce qui induit des contraintes thermiques et des risques de casse importants.

Le but de la présente invention est, par conséquent, de remédier aux différents inconvénients présentés par les cinq variantes de fours qui viennent d'être décrites, et de proposer un dispositif de traitement thermique, et notamment un four ("heating furnace" en anglais), qui puisse être mis en oeuvre sans un vieillissement prématuré de ses éléments constitutifs que sont ses pièces internes et/ou ses résistances de chauffe, et qui soit moins onéreux en termes d'investissement, de fonctionnement et/ou d'entretien.

Cette résistance au vieillissement améliorée par rapport à celle des fours de l'état de la technique doit, de surcroît, être obtenue quelles que soient les conditions de mise en oeuvre des traitements thermiques, ces traitements thermiques devant notamment pouvoir, de manière concomitante :

- être conduits à de hautes températures, c'est-à-dire à des températures qui peuvent typiquement être supérieures ou égales à 1500 °C, avantageusement supérieures ou égales à 1800 °C, voire même supérieures ou égales à 2000 °C,
- sur des périodes prolongées, qui peuvent aller de plusieurs heures à plusieurs centaines d'heures,
- avec un nombre élevé, typiquement supérieur à 100, de cycles intermédiaires de montée et de descente en température,
- dans des conditions de potentiel oxygène maîtrisées, que les conditions d'atmosphère, dans l'enceinte du four, soient réductrices ou bien, au contraire, oxydantes, et ce
- avec une maîtrise particulièrement fine et contrôlée des paramètres opératoires que sont la température et la pression partielle des gaz oxydants ou réducteurs mis en oeuvre.

## Exposé de l'invention

Le but, ainsi que d'autres, sont atteints, en premier lieu, par un dispositif de traitement thermique du type précité, par exemple un four, c'est-à-dire un dispositif de traitement thermique comme divulgué dans les revendications 1-11.

Les inventeurs ont observé que l'interposition, entre les éléments constitutifs d'un dispositif de traitement thermique du type céramique/graphite ou céramique/SiC, d'un élément intermédiaire en un matériau réfractaire tel que défini ci-dessus permet de conserver les avantages présentés par les fours selon les première et quatrième variantes décrites précédemment, et notamment leur aptitude à être utilisés dans de nombreuses applications, mais également de préserver l'intégrité dans le temps des pièces internes en céramique, d'une part, et des résistances de chauffe, d'autre part.

En outre, le dispositif de traitement thermique selon l'invention est intéressant d'un point de vue économique, les coûts de fabrication et d'entretien étant modérés comparativement à ceux de certaines des variantes de fours décrites ci-dessus.

Par ailleurs, cette interposition de l'élément intermédiaire à distance des pièces internes en céramique, d'une part, et des résistances de chauffe en graphite ou en SiC, d'autre part, permet, par la formation d'un vide de part et d'autre de l'élément intermédiaire, d'éviter les phénomènes délétères de dilatation thermique qui surviennent avec la mise en oeuvre de fours spécifiques à protection des pièces internes (cinquième variante ci-dessus) dans le cas de traitements thermiques conduits à haute température, en particulier à partir de 1500 °C, avantageusement à partir de 1700 °C.

Ainsi, par rapport aux fours de l'art antérieur, le dispositif de traitement thermique selon l'invention permet d'envisager un nombre élevé, typiquement supérieur à 100, de cycles thermiques de montée et de descente en température, la température pouvant atteindre ces valeurs de 1500 °C, voire de 1700 °C et même au-delà, pendant une durée plus ou moins prolongée.

En particulier, la durée cumulée à ces températures élevées peut aisément dépasser quelques centaines d'heures, avant qu'une dégradation du dispositif de traitement thermique selon l'invention ne soit observée. À titre de comparaison, la dégradation de la pièce interne d'un four du type céramique/graphite (première variante décrite ci-dessus) est notable au bout de quelques heures de traitement thermique à 1700 °C, cette dégradation étant même suivie d'une casse de la pièce interne après une durée cumulée d'une cinquantaine d'heures à cette température de 1700 °C.

La disposition de l'élément intermédiaire entre la pièce interne et la résistance de chauffe peut être avantageusement optimisée pour ne pas induire de perturbations tant au niveau du traitement thermique de l'échantillon de matière placé dans la chambre de la pièce interne en céramique qu'au niveau de l'acquisition du signal, par exemple dans le cas d'un suivi thermique ou dilatométrique. De manière plus particulièrement avantageuse, la distance entre la surface externe de la pièce interne et la surface interne de l'élément intermédiaire doit être la plus faible possible, sous réserve que ces deux surfaces n'entrent pas en contact l'une avec l'autre et ce, pendant toute la durée du traitement thermique et quelle que soit la température impliquée lors de ce traitement thermique.

Dans une variante avantageuse de réalisation non revendiquée, et pour limiter encore le risque de perturbations du traitement thermique de l'échantillon de matière placé dans la chambre de la pièce interne en céramique, l'élément intermédiaire a une épaisseur, notée "e", qui est choisie de manière à satisfaire un nombre de Biot, noté "Bi" (sans dimension), strictement inférieur à 0,1 (Bi < 0,1), Bi étant défini par l'équation suivante :

$$Bi = \frac{h \times e}{\lambda}$$

avec

"h" : coefficient global de transfert thermique du matériau réfractaire formant l'élément intermédiaire (en $W.m^{-2}.K^{-1}$), et
"λ" : conductivité thermique (en $W.m^{-1}.K^{-1}$) du matériau réfractaire formant l'élément intermédiaire,
h et λ étant mesurés sur le matériau réfractaire de l'élément intermédiaire porté à une température donnée, et h étant dépendant du type d'écoulement et de la géométrie de l'élément intermédiaire.

Dans le cadre de la présente invention, l'écoulement est un écoulement de type laminaire et la géométrie de l'élément intermédiaire est cylindrique, avantageusement cylindrique de révolution.

Dans cette variante avantageuse, l'élément intermédiaire présente donc une épaisseur e en m) qui répond à l'inéquation suivante :

$$e < \frac{0,1.\lambda}{h}$$

λ et h étant définis comme décrit ci-dessus et mesurés sur le matériau réfractaire de l'élément intermédiaire à une température comprise entre 100 °C et 2000 °C et, avantageusement, comprise entre 1000 °C et 1700 °C.

Lorsque l'épaisseur e de l'élément intermédiaire est effectivement choisie de telle sorte que Bi < 0,1, l'élément intermédiaire présente une isotropie de température, ce qui permet d'éviter les écarts de température en fonction des variations de température imposées par la résistance de chauffe.

La pièce interne, l'élément intermédiaire ainsi la résistance de chauffe du dispositif de traitement thermique sont coaxiaux et cylindriques de révolution.

Dans cette variante avantageuse de réalisation, on notera respectivement $r_1$ et $L_1$ le rayon externe et la longueur de la pièce interne en céramique et respectivement $r_2$ et $L_2$ le rayon interne et la longueur de l'élément intermédiaire.

Dans une première variante plus particulièrement avantageuse, le rapport $r_2/r_1$ est tel que $1 < r_2/r_1 \le 1,5$. Dans cette configuration, le rayonnement thermique rayonné par l'élément intermédiaire sur lui-même est limité.

Dans une variante préférentielle, le rapport $r_2/r_1$ est tel que $1 < r_2/r_1 \le 1,1$ et, plus préférentiellement encore, tel que $1 < r_2/r_1 \le 1,05$.

Dans une seconde variante plus particulièrement avantageuse, les longueurs $L_1$ de la pièce interne en céramique et $L_2$ de l'élément intermédiaire étant identiques et égales à une longueur notée L ($L_1 = L_2 = L$), le rapport $L/r_1$ est tel que $L/r_1 \ge 1$.

Dans cette configuration, le rayonnement thermique de l'élément intermédiaire sur la pièce interne est optimisé. Aussi, et malgré son interposition entre la résistance de chauffe et la pièce interne, cet élément intermédiaire assure une transmission thermique homogène et particulièrement performante en direction de la pièce interne en céramique. Ce constat est d'autant plus marqué dans le cas où le matériau réfractaire de cet élément intermédiaire est un matériau métallique réfractaire qui, par définition, se caractérise par une bonne conductivité thermique. Comme on le verra dans l'exemple détaillé ci-après, cette transmission thermique se trouve même être améliorée par rapport à celle fournie par la résistance de chauffe en graphite d'un dispositif de traitement thermique similaire mais dépourvu de l'élément intermédiaire en matériau réfractaire.

Dans une variante préférentielle, le rapport $L/r_1$ est tel que $L/r_1 \geq 5$.

Ces première et seconde variantes plus particulièrement avantageuses qui viennent d'être décrites peuvent être mises en oeuvre indépendamment l'une de l'autre ou concomitamment.

Comme indiqué précédemment, l'élément intermédiaire est en un matériau réfractaire, ce matériau réfractaire étant choisi parmi un matériau métallique réfractaire et un matériau céramique réfractaire.

Lorsque le matériau réfractaire de l'élément intermédiaire est un matériau métallique réfractaire, celui-ci peut être formé soit par un métal réfractaire choisi parmi le niobium, le molybdène, le tantale, le tungstène, le rhénium et le hafnium, soit par un alliage de deux ou plusieurs des métaux réfractaires qui viennent d'être cités.

Dans une variante avantageuse, le matériau métallique réfractaire de l'élément intermédiaire est le molybdène.

Lorsque le matériau réfractaire de l'élément intermédiaire est un matériau céramique réfractaire, celui-ci peut être formé par un carbure ou un nitrure.

Dans une variante avantageuse, lorsque le matériau céramique réfractaire est formé par un carbure, celui-ci peut être choisi parmi le carbure de bore $B_4C$, le carbure de titane TiC et le carbure de tungstène WC.

Dans une variante avantageuse, lorsque le matériau céramique réfractaire est un nitrure, celui-ci peut être choisi parmi le nitrure de bore BN et le nitrure de titane TiN.

Bien que non indispensable, l'enceinte du dispositif de traitement thermique peut être placée sous une atmosphère spécifique.

À titre d'exemple, une telle atmosphère peut comprendre un gaz inerte, de préférence l'argon.

Cette atmosphère peut également comprendre de l'eau, en présence ou non d'un gaz inerte ou d'un mélange de deux ou plusieurs gaz inertes.

Cette enceinte peut également être placée sous une atmosphère réductrice ou bien, au contraire, sous une atmosphère oxydante. Le choix de la nature réductrice ou oxydante de l'atmosphère de l'enceinte est directement lié à la nature du traitement thermique envisagé.

L'atmosphère de l'enceinte peut bien entendu ne comprendre qu'un gaz inerte, que de l'eau, qu'un gaz oxydant ou bien qu'un gaz réducteur. Mais il peut tout à fait être envisagé que cette atmosphère comprenne également un mélange d'un ou plusieurs gaz oxydants, ou d'un ou plusieurs gaz réducteurs, avec un ou plusieurs gaz inertes et/ou de l'eau.

Dans une variante avantageuse de l'invention, la céramique de la pièce interne est choisie parmi l'alumine, la zircone et la mullite.

Le dispositif de traitement thermique selon l'invention peut également être muni d'un ou plusieurs éléments complémentaires que l'on rencontre de manière classique dans ce type de dispositifs.

Ainsi, le dispositif de traitement thermique selon l'invention peut être équipé d'au moins un thermocouple, par exemple un thermocouple choisi parmi un thermocouple de suivi de la température et un thermocouple de commande de la température.

Ce ou ces thermocouples peuvent être disposés au voisinage de la pièce interne et/ou au voisinage de la résistance de chauffe.

En particulier, le thermocouple de suivi de la température est préférentiellement disposé au voisinage de la pièce interne pour assurer au plus près le suivi de la température à laquelle est soumis l'échantillon de matière placé dans la chambre de la pièce interne en céramique tandis que le thermocouple de commande de la température est préférentiellement disposé au plus près de la résistance de chauffe en graphite ou en SiC.

Le dispositif de traitement thermique selon l'invention peut également être muni d'un ou plusieurs moyens de positionnement et de support visant à maintenir l'élément intermédiaire au sein de l'enceinte.

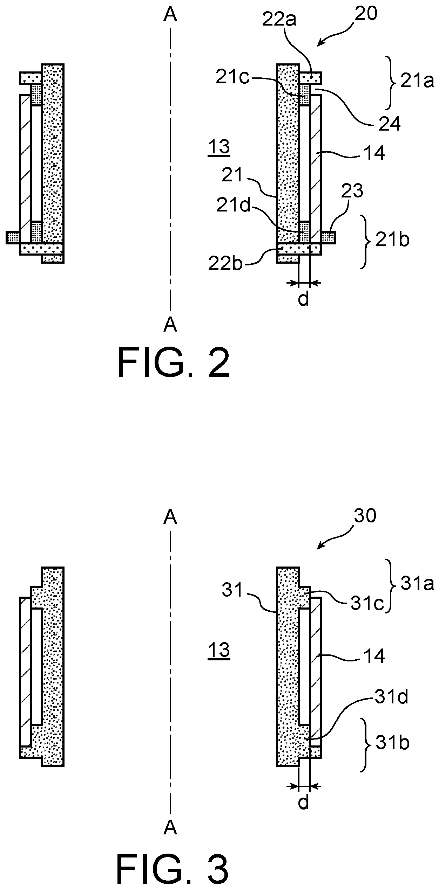

Ces moyens de positionnement et de support sont avantageusement situés au niveau de l'une ou des deux parties d'extrémité de la pièce interne en céramique. De préférence, ces moyens de positionnement et de support sont solidaires de cette pièce interne. Ces moyens de positionnement et de support peuvent être assurés par des éléments distincts (comme illustré sur la figure 2 ci-après) ou bien par un seul et même élément (comme illustré sur la figure 3).

L'invention se rapporte, en deuxième lieu, à un procédé de traitement thermique d'un échantillon.

Selon l'invention, ce procédé de traitement thermique d'un échantillon comprend les étapes (a) à (e) successives suivantes :

(a) une mise en place de l'échantillon dans la chambre de la pièce interne du dispositif de traitement thermique tel que défini ci-dessus, les caractéristiques avantageuses et préférentielles de ce dispositif de traitement thermique pouvant être prises seules ou en combinaison,

(b) une montée en température d'une température initiale $T_I$ jusqu'à une température de palier $T_P$,

(c) un maintien de la température à la température de palier $T_P$ pendant une durée t,

(d) une descente en température depuis la température de palier $T_P$ jusqu'à une température finale $T_F$, et

(e) le retrait de l'échantillon tel qu'obtenu à l'issue de l'étape (d).

Grâce à la mise en oeuvre du dispositif de traitement thermique particulier, qui comprend un élément intermédiaire en un matériau réfractaire interposé entre la pièce interne en céramique et la résistance de chauffe en graphite ou en SiC, le procédé selon l'invention permet de réaliser un traitement thermique fiable, dans lequel la température fournie par la résistance de chauffe à la pièce interne et, par conséquent, à l'échantillon de matière qu'elle renferme, est homogène.

S'il peut bien entendu ne comprendre qu'un seul cycle thermique comprenant les étapes (b) à (d), le procédé de traitement thermique selon l'invention peut bien entendu comprendre deux, trois, voire plus, cycles thermiques successifs comprenant ces mêmes étapes (b) à (d), ces cycles thermiques successifs étant mis en oeuvre préalablement à l'étape (e) de retrait de l'échantillon. En particulier, dans le complément de description qui suit, un exemple de procédé de traitement thermique comprenant six cycles thermiques successifs est décrit.

Selon un mode de réalisation avantageux non revendiqué, le procédé de traitement thermique selon l'invention, qu'il comprenne un ou plusieurs cycles thermiques successifs, peut, en outre, comprendre, entre les étapes (a) et (b) et/ou entre les étapes (c) et (d), un ou plusieurs cycles thermiques complémentaires au cours desquels la température est portée à une température intermédiaire $T_i$, avec $T_i < T_P$.

La présence de l'élément intermédiaire en un matériau réfractaire interposé entre la pièce interne en céramique et la résistance de chauffe en graphite ou en SiC au sein du dispositif de traitement thermique assure au procédé de traitement thermique une mise en oeuvre maîtrisée et fiable de nombreux cycles d'incursion, pendant une durée t plus ou moins prolongée, à la température de palier $T_P$ et ce, sans vieillissement prématuré des éléments qui forment ce dispositif de traitement thermique, notamment sa pièce interne en céramique, sa résistance de chauffe en graphite ou en SiC et ses éventuels thermocouples de suivi et/ou de commande de la température.

En particulier, cette température de palier $T_P$ de l'étape (b) peut être supérieure ou égale à 1000 °C. Elle est avantageusement supérieure ou égale à 1500 °C, préférentiellement supérieure ou égale à 1700 °C et, plus préférentiellement encore, supérieure ou égale à 1800 °C.

La durée t de maintien de la température à la température $T_P$ de l'étape (c) peut, quant à elle, être supérieure ou égale à 1 h. Elle est avantageusement supérieure ou égale à 5 h et, préférentiellement, comprise entre 10 h et 1000 h.

La durée cumulée de maintien de la température à la température $T_P$ au cours d'étapes (c) de cycles thermiques successifs ainsi que, le cas échéant, à la température intermédiaire Ti peut aisément être supérieure ou égale à 300 h et, avantageusement, supérieure ou égale à 1000 h.

Dans le cadre de la présente invention, le traitement thermique peut être un frittage, un traitement thermochimique, tel qu'un traitement d'oxydo-réduction ou une calcination, ou bien une analyse thermique, l'analyse thermique étant par exemple choisie parmi une analyse thermogravimétrique (ATG), une analyse thermique différentielle (ATD) ou une analyse dilatométrique.

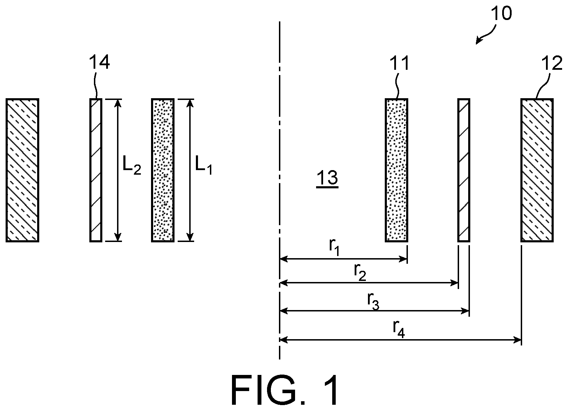

L'invention sera mieux comprise à la lumière du complément de description qui suit. Il est précisé que ce complément de description, qui se réfère notamment aux figures 1 à 3, 4A, 4B, 5A et 5B telles qu'annexées, n'est donné qu'à titre d'illustration de l'objet de l'invention et qu'il ne doit en aucun cas être interprété comme une limitation de cet objet.

**Brève description des dessins**

[Fig. 1] représente une vue partielle schématique en section longitudinale de la pièce interne, de l'élément intermédiaire et de la résistance de chauffe d'un dispositif de traitement thermique selon l'invention, les moyens de positionnement et les moyens de support de l'élément intermédiaire n'étant pas représentés.

[Fig. 2] représente une vue partielle schématique en section longitudinale de la pièce interne et de l'élément intermédiaire d'un dispositif de traitement thermique selon l'invention, ce dispositif étant muni de moyens de positionnement et de moyens de support de l'élément intermédiaire selon une première conformation.

[Fig. 3] représente une vue partielle schématique en section longitudinale de la pièce interne et de l'élément intermédiaire d'un dispositif de traitement thermique selon l'invention, ce dispositif étant muni de moyens de positionnement et de moyens de support de l'élément intermédiaire selon une seconde conformation.

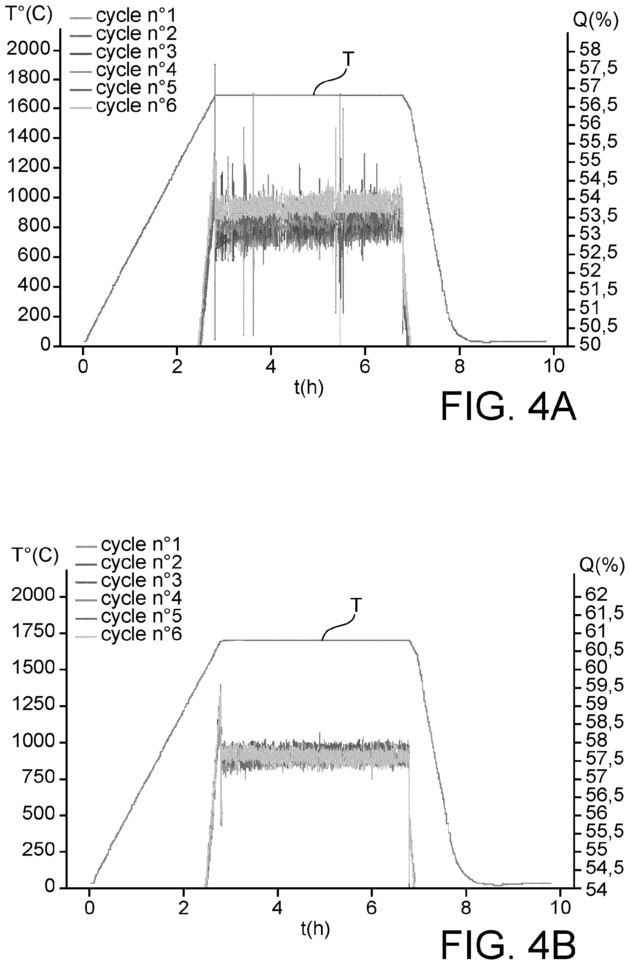

[Fig. 4A] représente un graphe illustrant la puissance de chauffe (notée Q et exprimée en %) de la résistance de chauffe en fonction du programme thermique imposé, qui correspond à la température de chauffe (notée T et exprimée en °C) appliquée pendant une durée (notée t et exprimée en h), pour chacun des 6 cycles thermiques d'un dispositif de traitement thermique de référence.

[Fig. 4B] représente un graphe illustrant la puissance de chauffe (notée Q et exprimée en %) de la résistance de chauffe en fonction du programme thermique imposé, qui correspond à la température de chauffe (notée T et exprimée en °C) appliquée pendant une durée (notée t et exprimée en h), pour chacun des 6 cycles thermiques d'un dispositif de traitement thermique selon l'invention comprenant la pièce interne, l'élément intermédiaire et la résistance de chauffe qui présentent les valeurs $r_1$ à $r_4$ telles qu'exemplifiées lors de la description de la figure 1 et, l'élément intermédiaire étant maintenu dans l'enceinte par les moyens de positionnement et de fixation illustrés à la figure 2.

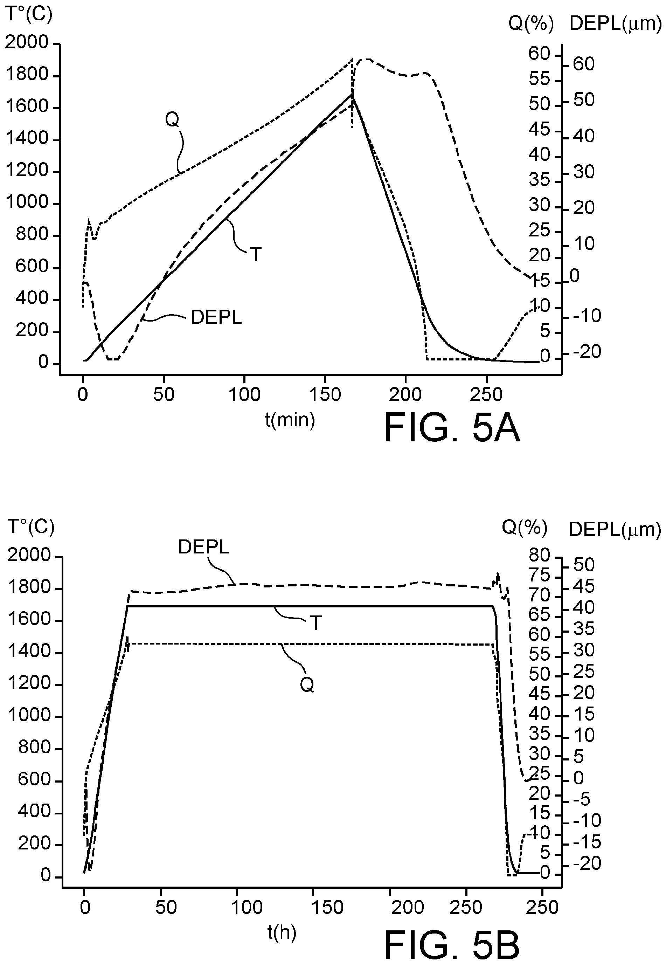

[Fig. 5A] représente un graphe illustrant le suivi du signal en déplacement (noté DEPL et exprimé en $\mu$m) en fonction du programme thermique imposé, qui correspond à la température de chauffe (notée T et exprimée en °C) appliquée pendant une durée (notée t et exprimée en min), pour un cycle thermique d'un dispositif de traitement thermique de référence.

[Fig. 5B] représente un graphe illustrant le suivi du signal en déplacement (noté DEPL et exprimé en $\mu$m) en fonction du programme thermique imposé, qui correspond à la température de chauffe (notée T et exprimée en °C) appliquée pendant une durée (notée t et exprimée en h), pour un cycle thermique d'un dispositif de traitement thermique selon l'invention comprenant la pièce interne, l'élément intermédiaire et la résistance de chauffe qui présentent les valeurs $r_1$ à $r_4$ telles qu'exemplifiées lors de la description de la figure 1, l'élément intermédiaire étant maintenu dans l'enceinte par les moyens de positionnement et de fixation illustrés à la figure 2.

Il est précisé que les éléments communs aux figures 1 à 3 sont identifiés par une même référence numérique.

**Exposé détaillé de modes de réalisation particuliers**

Sur la figure 1, on a représenté une partie d'un dispositif de traitement thermique 10 conforme à l'invention.

Ce dispositif de traitement thermique 10 comprend une enceinte (non représentée) dans laquelle sont disposées une pièce interne 11 et une résistance de chauffe 12, la résistance de chauffe 12 étant placée autour de la pièce interne 11.

La résistance de chauffe 12 peut être en graphite ou en carbure de silicium SiC tandis que la pièce interne 11 est en céramique, la céramique étant par exemple choisie parmi l'alumine, la zircone et la mullite, la céramique étant de préférence l'alumine.

La pièce interne 11, également appelée interne ou moufle, délimite un volume formant une chambre 13 qui est destinée à recevoir le ou les échantillons de matière à traiter thermiquement.

Cette chambre 13 peut avantageusement être placée sous une atmosphère comprenant un ou plusieurs gaz inertes et/ou de l'eau, cette atmosphère pouvant en outre être réductrice, ou bien au contraire oxydante, pour l'échantillon destiné à y être traité thermiquement.

L'enceinte de ce dispositif de traitement thermique 10 comprend, en outre, un élément intermédiaire 14 qui est interposé entre la pièce interne 11 et la résistance de chauffe 12 et à distance de ces dernières. Ainsi, l'élément intermédiaire 14 n'entre en contact ni avec la pièce interne 11, ni avec la résistance de chauffe 12.

Comme représenté sur la figure 1, l'enceinte du dispositif de traitement thermique ne comprend que la pièce interne 11, la résistance de chauffe 12 et l'élément intermédiaire 14.

Dans l'espace délimité par la pièce interne 11 et la résistance de chauffe 12, circule un gaz inerte, typiquement de l'argon.

Cet élément intermédiaire 14 est en un matériau réfractaire qui est choisi parmi un matériau métallique réfractaire et un matériau céramique réfractaire.

Lorsque l'élément intermédiaire 14 est formé par un matériau métallique réfractaire, celui-ci peut être formé par un métal réfractaire ou par un alliage de métaux réfractaires, le ou les métaux réfractaires étant choisis parmi le niobium, le molybdène, le tantale, le tungstène, le rhénium et le hafnium.

Avantageusement, le matériau métallique réfractaire est le molybdène.

Le molybdène peut en particulier présenter une conductivité thermique de 140 $W.m^{-1}.K^{-1}$ lorsqu'elle est mesurée à la température ambiante (soit 20 °C) à 100 $W.m^{-1}.K^{-1}$ lorsqu'elle est mesurée à une température de 1400 °C.

Lorsque l'élément intermédiaire 14 est formé par un matériau céramique réfractaire, celui-ci peut être formé par un carbure, par exemple du carbure de bore $B_4C$, du carbure de titane TiC ou encore du carbure de tungstène WC, ou par un nitrure, par exemple du nitrure de bore BN ou du nitrure de titane TiN.

Sur la figure 1, et en accord avec la présente invention, la pièce interne 11, la résistance de chauffe 12 et l'élément intermédiaire 14 sont tous trois coaxiaux, par rapport à l'axe A vertical, et cylindriques de révolution.

Le rayon externe de la pièce interne 11 est noté $r_1$. Les rayons interne et externe de l'élément intermédiaire 14 sont respectivement notés $r_2$ et $r_3$. Le rayon interne de la résistance de chauffe est noté $r_4$. Les longueurs de la pièce interne 11 et de l'élément intermédiaire 14 sont respectivement notées $L_1$ et $L_2$.

Dans une variante de l'invention, le rapport $r_2/r_1$ est tel que $1 < r_2/r_1 \leq 1,5$, avantageusement tel que $1 < r_2/r_1 \leq 1,1$ et, préférentiellement, tel que $1 < r_2/r_1 \leq 1,05$.

Ainsi, selon un exemple illustratif et non limitatif, le dispositif de traitement thermique 10 peut présenter les valeurs de $r_1$ à $r_4$ suivantes :

- $r_1$ = 11,50 mm,
- $r_2$ = 11,95 mm,
- $r_3$ = 12,25 mm, et
- $r_4$ = 13,60 mm, auquel cas l'épaisseur e de l'élément intermédiaire est égale à $r_3$ - $r_2$ = 0,3 mm et le rapport $r_2/r_1$ est égal à 1,039.

Dans une autre variante de l'invention, les longueurs de la pièce interne 11 et de l'élément intermédiaire 14 sont identiques et égales à L ($L_1$ = $L_2$ = L) et le rapport $L/r_1$ est tel que $L/r_1 \geq 1$ et, préférentiellement, tel que $L/r_1 \geq 5$.

Comme représenté sur les figures 2 et 3, l'élément intermédiaire 14 du dispositif de traitement thermique peut être maintenu dans l'enceinte par un ou plusieurs moyens de positionnement et de support, ce ou ces moyens de positionnement et de support étant avantageusement situés au niveau de l'une ou des deux parties d'extrémité de la pièce interne.

En référence à une première conformation représentée à la figure 2, le dispositif de traitement thermique 20 comprend une pièce interne 21 en céramique munie, à ses parties d'extrémité supérieure 21a et inférieure 21b, de deux cales 21c et 21d et de deux butées 22a et 22b. Les cales 21c et 21d correspondent à des moyens de positionnement, en particulier de centrage coaxial, de l'élément intermédiaire 14 qui vient en appui contre ces cales 21c et 21d tandis que la butée 22b correspond à un moyen de support de cet élément intermédiaire 14 sous l'effet du poids de ce dernier.

Lorsque le dispositif de traitement thermique 20 est positionné verticalement (comme illustré sur la figure 2), l'élément intermédiaire 14 est supporté par la butée 22b, la butée 22a n'étant alors pas indispensable. Pour optimiser le maintien de l'élément intermédiaire 14, le dispositif de traitement thermique 20 peut être muni, en outre, d'une butée complémentaire 23.

Dans une telle configuration verticale, l'élément intermédiaire 14 peut être aisément retiré du dispositif de traitement thermique 20, notamment dans l'hypothèse où il viendrait à être dégradé, pour être remplacé par un nouvel élément intermédiaire 14.

Lorsque le dispositif de traitement thermique 20 est positionné horizontalement, l'élément intermédiaire 14 est supporté mécaniquement par les cales 21c et 21d et contenu par les butées 22a et 22b, la butée complémentaire 23 devenant alors optionnelle.

Les butées 22a, 22b et, le cas échéant, la butée complémentaire 23 sont en céramique, de préférence en une même céramique que celle de la pièce interne 21 et, par exemple, en alumine. L'espace ou vide 24 entre l'élément intermédiaire 14 et la butée 22a permet à l'élément intermédiaire 14 de se dilater sans contrainte lors de la montée en température du dispositif de traitement thermique 20.

La fixation des cales 21c et 21d ainsi que des butées 22a et 22b et, le cas échéant, de la butée complémentaire 23 sur la pièce interne 21 peut notamment être assurée par une colle adaptée, par exemple par la colle commercialisée sous la référence Resbond™989F par la société Cotronics Corp.

On peut ainsi avantageusement équiper un four céramique/graphite de l'art antérieur (par exemple de la première variante) de cales 21c et 21d ainsi que de butées 22b et, optionnellement, 22a sur lesquelles on vient positionner l'élément intermédiaire 14 de manière à prolonger sa durée d'utilisation.

En référence à une deuxième conformation représentée à la figure 3, le dispositif de traitement thermique 30 comprend une pièce interne 31 en céramique munie d'un épaulement 31c usiné à sa partie d'extrémité supérieure 31a et d'un épaulement 31d usiné à sa partie d'extrémité inférieure 31b.

L'épaulement 31 c correspond à la cale 21c tandis que l'épaulement 31d correspond à l'ensemble formé par la cale 21d et la butée 22b du dispositif de traitement thermique 20 représenté à la figure 2. Ce faisant, l'épaulement 31d est un moyen unitaire assurant simultanément le centrage et le support de l'élément intermédiaire 14.

Deux dispositifs de traitement thermique ont été soumis à des tests de vieillissement dans les conditions opératoires précisées dans le tableau 1 ci-dessous :

- le premier est un dispositif de traitement thermique conforme à l'invention et du type du dispositif 20 représenté à la figure 2, avec une résistance de chauffe en graphite, une pièce interne 21 en céramique et un élément intermédiaire 14 en molybdène, étant précisé que la distance d entre la face externe de la pièce interne 21 et la face interne de l'élément intermédiaire 14 est de 0,3 mm, et

- le second est un dispositif de traitement thermique de référence, avec une résistance de chauffe en graphite, une pièce interne en céramique de conformation similaire à celle du dispositif selon l'invention mais ne comportant pas l'élément intermédiaire 14 en molybdène.

Tableau 1

| Conditions opératoires | Consignes |
|---|---|
| Température $T_P$ | 1700°C |

(suite)

| Conditions opératoires | Consignes |
|---|---|
| Atmosphère de l'enceinte | Ar/H$_2$ (4 % en vol) |
| Débit de gaz au niveau de la chambre | 10 NL/h (*) |
| Eau | 1000 ppm |
| Rampe de chauffe de T$_I$ à T$_P$ | 10 °C/min (de 20 °C à 1700 °C) |
| Durée t | 4 h |
| Rampe de descente de T$_P$ à T$_F$ | 30 °C/min (de 1700 °C à 30 °C) |
| Nombre de cycles | 6 |
| Débit d'argon au niveau de la résistance de chauffe | >10 NL/h (*) |
| (*) avec NL/h signifiant Normal Litre par heure | |

En complément de ces tests de vieillissement, le dispositif de traitement thermique selon l'invention a été soumis à un test de longue durée, pendant 24 h à 1700 °C, pour tenter d'exacerber les phénomènes d'interaction/vieillissement.

Lors de ces tests de vieillissement, les puissances de chauffe Q appelées par les résistances en graphite pour maintenir la température à la valeur de consigne, en l'espèce à la température de palier T$_P$ de 1700 °C, ont été suivies.

Les graphes correspondants obtenus avec la mise en oeuvre du dispositif de traitement thermique de référence sont reproduits à la figure 4A tandis que les graphes obtenus avec la mise en oeuvre du dispositif de traitement thermique selon l'invention sont reproduits à la figure 4B, la courbe notée "T" correspondant à la température de chauffe fournie par la résistance en graphite de chacun des dispositifs de traitement thermique.

La comparaison des graphes reportés sur ces figures 4A et 4B montre que l'élément intermédiaire 14 du dispositif de traitement thermique selon l'invention non seulement ne perturbe pas la thermique de l'échantillon de matière à traiter mais permet même une amélioration de la répétabilité des appels de puissance et, partant, des traitements thermiques correspondants.

Par ailleurs, au-delà de la répétabilité améliorée des traitements thermiques que permet la mise en oeuvre du dispositif de traitement thermique conforme à la présente invention, on observe que la puissance appelée pour assurer le traitement thermique, en passant de 1900 W pour le dispositif de référence à 2050 W pour le dispositif selon l'invention, n'est pas significativement accrue. Ce constat est donc intéressant en termes de bilan énergétique et, par conséquent, de coût du traitement thermique associé.

En outre, contrairement à ce que l'on observe avec le dispositif de traitement thermique de référence, on ne relève pas d'augmentation significative de la puissance nécessaire de chauffe au cours du temps avec le dispositif de traitement thermique selon l'invention comprenant l'élément intermédiaire en molybdène, ce qui signifie aussi que la résistance de chauffe en graphite vieillit peu comparativement à celle du dispositif de traitement thermique de référence. En effet, pour une même température de consigne, seule une augmentation de l'ordre de 2 % de la puissance de chauffe est nécessaire entre le début et la fin du test de vieillissement.

Les figures 5A et 5B illustrent le suivi du signal en déplacement DEPL (courbes notées "DEPL") d'un palpeur mécanique, placé sous une force d'appui de 5 g, dans des conditions d'atmosphère sous hélium dans les dispositifs de traitement thermique de référence (figure 5A) et selon l'invention (figure 5B), en fonction du programme thermique appliqué, la température de chauffe fournie par la résistance en graphite de chacun des dispositifs de traitement thermique étant repérée par la courbe notée "T", tandis que la puissance de chauffe Q appelée par la résistance de chauffe en graphite de chacun des dispositifs de traitement thermique est repérée par la courbe notée "Q".

La comparaison de ces figures 5A et 5B montre que les signaux obtenus avec le dispositif de traitement thermique conforme à l'invention sont bien meilleurs que ceux obtenus avec le dispositif de traitement thermique de référence.

La précision de répétabilité avec le dispositif de traitement thermique conforme à l'invention est de l'ordre de 2,5 μm (dérive du signal en isotherme) dans les conditions testées contre près de 4 fois plus avec le dispositif de traitement thermique de référence.

Les résultats des tests de vieillissement qui ont été conduits et discutés ci-dessus sont rassemblés dans le tableau 2 ci-après.

Tableau 2

| Paramètres de performance | Dispositif selon l'invention | Dispositif de référence |
|---|---|---|
| Durée de vie de la résistance de chauffe et de la pièce interne (à 1700 °C) | environ 1000 h | < 70 h |
| Variation du taux de chauffe entre le début et la fin du traitement thermique pour une consigne donnée (à 1700 °C) | non significatif | environ 2 % |
| Déplacement maximal du signal DEPL en isotherme (à 1700 °C) | $\leq 2,5 \ \mu m$ | environ 11,8 $\mu m$ |
| Dérive de la ligne de base maximale du signal DEPL | environ 3,3 $\mu m$ | environ 13,8 $\mu m$ |

Les résultats du tableau 2 montrent que la durée de vie des éléments constitutifs du dispositif de traitement thermique conforme à l'invention et, en particulier, la résistance de chauffe en graphite et la pièce interne en céramique, ainsi que la thermique de ce dispositif de traitement thermique sont significativement améliorées par la mise en oeuvre de l'élément intermédiaire en un matériau réfractaire, en l'espèce le molybdène.

La durée de vie d'un dispositif de traitement thermique conforme à l'invention, qui comprend un élément intermédiaire en un matériau métallique, ou céramique, réfractaire est donc prolongée de manière particulièrement significative par rapport à celle d'un dispositif de traitement thermique ne comprenant pas un tel élément intermédiaire.

**Revendications**

1. Dispositif de traitement thermique (10, 20, 30), tel qu'un four, comprenant une enceinte dans laquelle sont disposées :

   - une résistance de chauffe (12) en graphite ou en carbure de silicium, et
   - une pièce interne (11, 21, 31) en céramique qui délimite un volume formant une chambre (13),
   la résistance de chauffe (12) étant placée autour de la pièce interne (11, 21, 31), **caractérisé en ce que** le dispositif (10, 20, 30) comprend, en outre :

   - un élément intermédiaire (14) en un matériau réfractaire choisi parmi un matériau métallique réfractaire et un matériau céramique réfractaire,

   la résistance de chauffe (12), la pièce interne (11, 21, 31) et l'élément intermédiaire (14) étant coaxiaux et cylindriques de révolution, l'élément intermédiaire (14) étant interposé entre la résistance de chauffe (12) et la pièce interne (11, 21, 31) et à distance de ces dernières pour former un vide de part et d'autre de l'élément intermédiaire (14).

2. Dispositif (10, 20, 30) selon la revendication 1, dans lequel l'élément intermédiaire (14) a une épaisseur e qui répond à l'inéquation suivante :

$$e < \frac{0,1.\lambda}{h}$$

$\lambda$ et h correspondant respectivement aux valeurs de conductivité thermique et de coefficient global de transfert thermique du matériau réfractaire formant l'élément intermédiaire (14), $\lambda$ et h étant mesurés sur le matériau réfractaire de l'élément intermédiaire (14) à une température comprise entre 100°C et 2000 °C et, avantageusement, comprise entre 1000 °C et 1700 °C.

3. Dispositif (10, 20, 30) selon la revendication 1 ou 2, dans lequel, la pièce interne (11, 21, 31) présentant un rayon externe $r_1$ et une longueur $L_1$ et l'élément intermédiaire (14) présentant un rayon interne $r_2$ et une longueur $L_2$,

   - le rapport $r_2/r_1$ est tel que $1 < r_2/r_1 \leq 1,5$, avantageusement tel que $1 < r_2/r_1 \leq 1,1$, et/ou
   - $L_1 = L_2 = L$ et le rapport $L/r_1$ est tel que $L/r_1 \geq 1$ et, préférentiellement, tel que $L/r_1 \geq 5$.

4. Dispositif (10, 20, 30) selon la revendication 3, dans lequel :

- le rapport $r_2/r_1$ est tel que $1 < r_2/r_1 \leq 1{,}05$, et/ou
- $L_1 = L_2 = L$ et le rapport $L/r_1$ est tel que $L/r_1 \geq 5$.

5. Dispositif (10, 20, 30) selon l'une quelconque des revendications 1 à 4, dans lequel le matériau métallique réfractaire de l'élément intermédiaire (14) est formé par un métal réfractaire ou par un alliage de métaux réfractaires, le ou les métaux réfractaires étant choisis parmi le niobium, le molybdène, le tantale, le tungstène, le rhénium et le hafnium, le matériau métallique réfractaire étant avantageusement le molybdène.

6. Dispositif (10, 20, 30) selon l'une quelconque des revendications 1 à 4, dans lequel le matériau céramique réfractaire de l'élément intermédiaire (14) est formé par un carbure, avantageusement choisi parmi $B_4C$, TiC et WC, ou par un nitrure, avantageusement choisi parmi BN et TiN.

7. Dispositif (10, 20, 30) selon l'une quelconque des revendications 1 à 6, dans lequel l'enceinte est placée sous une atmosphère comprenant un gaz inerte, de préférence l'argon.

8. Dispositif (10, 20, 30) selon l'une quelconque des revendications 1 à 7, dans lequel l'enceinte est placée sous une atmosphère réductrice ou sous une atmosphère oxydante.

9. Dispositif (10, 20, 30) selon l'une quelconque des revendications 1 à 8, dans lequel la céramique de la pièce interne (11, 21, 31) est choisie parmi l'alumine, la zircone et la mullite.

10. Dispositif (10, 20, 30) selon l'une quelconque des revendications 1 à 9, dans lequel le dispositif (10, 20, 30) comprend, en outre, au moins un thermocouple, par exemple choisi parmi un thermocouple de suivi de la température et un thermocouple de commande de la température.

11. Dispositif (20, 30) selon l'une quelconque des revendications 1 à 10, dans lequel l'élément intermédiaire est maintenu dans l'enceinte par un ou plusieurs moyens de positionnement et de support (21c, 21d, 22a, 22b, 23, 31c, 31d), ce ou ces moyens de positionnement et de support (21c, 21d, 22a, 22b, 23, 31c, 31d) étant avantageusement situés au niveau de l'une ou des deux parties d'extrémité (21a, 21b, 31a, 31b) de la pièce interne (21, 31).

12. Procédé de traitement thermique d'un échantillon comprenant les étapes (a) à (e) successives suivantes :

(a) une mise en place de l'échantillon dans la chambre (13) de la pièce interne (11, 21, 31) du dispositif de traitement thermique (10, 20, 30) selon l'une quelconque des revendications 1 à 11,
(b) une montée en température d'une température initiale $T_I$ jusqu'à une température de palier $T_P$,
(c) un maintien de la température à la température de palier $T_P$ pendant une durée t,
(d) une descente en température depuis la température de palier $T_P$ jusqu'à une température finale $T_F$, et
(e) le retrait de l'échantillon tel qu'obtenu à l'issue de l'étape (d).

13. Procédé selon la revendication 12, dans lequel la température de palier $T_P$ est supérieure ou égale à 1000°C, avantageusement supérieure ou égale à 1500°C, préférentiellement supérieure ou égale à 1700°C et, plus préférentiellement encore, supérieure ou égale à 1800 °C.

14. Procédé selon la revendication 12 ou 13, dans lequel la durée t est supérieure ou égale à 1 h, avantageusement supérieure ou égale à 5 h et, préférentiellement, comprise entre 10 h et 1000 h.

15. Procédé selon l'une quelconque des revendications 12 à 14, dans lequel le traitement thermique est un frittage, un traitement thermochimique ou une analyse thermique, l'analyse thermique étant par exemple choisie parmi une analyse thermogravimétrique, une analyse thermique différentielle ou une analyse dilatométrique.

**Patentansprüche**

1. Vorrichtung zur Wärmebehandlung (10, 20, 30), wie ein Ofen, ein Gehäuse umfassend, in dem eingerichtet sind:

- ein Heizwiderstand (12) aus Graphit oder Siliziumkarbid, und
- ein Innenteil (11, 21, 31) aus Keramik, das ein Volumen eingrenzt, das eine Kammer (13) bildet,
wobei der Heizwiderstand (12) um das Innenteil (11, 21, 31) angeordnet ist, **dadurch gekennzeichnet, dass** die Vorrichtung (10, 20, 30) ferner umfasst:

- ein Zwischenelement (14) aus einem Feuerfestmaterial, ausgewählt aus einem metallenen Feuerfestmaterial und einem keramischen Feuerfestmaterial,

wobei der Heizwiderstand (12), das Innenteil (11, 21, 31) und das Zwischenelement (14) koaxial und drehzylindrisch sind, wobei das Zwischenelement (14) zwischen dem Heizwiderstand (12) und dem Innenteil (11, 21, 31) und in einem Abstand von diesen letzteren eingesetzt ist, um einen Hohlraum auf beiden Seiten des Zwischenelements (14) zu bilden.

2. Vorrichtung (10, 20, 30) nach Anspruch 1, wobei das Zwischenelement (14) eine Dicke e hat, die der folgenden Ungleichung entspricht:

$$e < \frac{0{,}1 . \lambda}{h}$$

wobei $\lambda$ und h jeweils den Werten der Wärmeleitfähigkeit und dem globalen Wärmeübertragungskoeffizienten des Feuerfestmaterials, das das Zwischenelement (14) bildet, entsprechen, wobei $\lambda$ und h am Feuerfestmaterial des Zwischenelements (14) gemessen werden bei einer Temperatur zwischen 100 °C und 2000 °C, und vorteilhafterweise zwischen 1000 °C und 1700 °C.

3. Vorrichtung (10, 20, 30) nach Anspruch 1 oder 2, wobei das Innenteil (11, 21, 31) einen Außenradius $r_1$ und eine Länge $L_1$ aufweist und das Zwischenelement (14) einen Innenradius $r_2$ und eine Länge $L_2$ aufweist,

- das Verhältnis $r_2/r_1$ so ist, dass $1 < r_2/r_1 \leq 1{,}5$, vorteilhafterweise so, dass $1 < r_2/r_1 \leq 1{,}1$, und/oder
- $L_1 = L_2 = L$ und das Verhältnis $L/r_1$ so ist, dass $L/r_1 \geq 1$, und bevorzugterweise so, dass $L/r_1 \geq 5$.

4. Vorrichtung (10, 20, 30) nach Anspruch 3, wobei:

- das Verhältnis $r_2/r_1$ so ist, dass $1 < r_2/r_1 \leq 1{,}05$, und/oder
- $L_1 = L_2 = L$ und das Verhältnis $L/r_1$ so ist, dass $L/r_1 \geq 5$.

5. Vorrichtung (10, 20, 30) nach einem der Ansprüche 1 bis 4, wobei das metallene Feuerfestmaterial des Zwischenelements (14) aus einem feuerfesten Metall oder einer Legierung aus feuerfesten Metallen gebildet wird, wobei das oder die feuerfesten Metalle aus Niob, Molybdän, Tantal, Wolfram, Rhenium und Hafnium ausgewählt sind, wobei das metallene Feuerfestmaterial vorteilhafterweise Molybdän ist.

6. Vorrichtung (10, 20, 30) nach einem der Ansprüche 1 bis 4, wobei das keramische Feuerfestmaterial des Zwischenelements (14) durch ein Karbid gebildet wird, das vorteilhafterweise aus $B_4C$, TiC und WC ausgewählt ist, oder durch ein Nitrid, das vorteilhafterweise aus BN und TiN ausgewählt ist.

7. Vorrichtung (10, 20, 30) nach einem der Ansprüche 1 bis 6, wobei das Gehäuse unter eine Atmosphäre gesetzt ist, die ein Inertgas umfasst, vorzugsweise Argon.

8. Vorrichtung (10, 20, 30) nach einem der Ansprüche 1 bis 7, wobei das Gehäuse unter eine reduzierende Atmosphäre oder unter eine oxidierende Atmosphäre gesetzt ist.

9. Vorrichtung (10, 20, 30) nach einem der Ansprüche 1 bis 8, wobei die Keramik des Innenteils (11, 21, 31) aus Aluminiumoxid, Zirkonerde und Mullit ausgewählt ist.

10. Vorrichtung (10, 20, 30) nach einem der Ansprüche 1 bis 9, wobei die Vorrichtung (10, 20, 30) ferner mindestens ein Thermoelement umfasst, beispielsweise ausgewählt aus einem Temperaturüberwacher-Thermoelement und einem Temperaturregler-Thermoelement.

11. Vorrichtung (20, 30) nach einem der Ansprüche 1 bis 10, wobei das Zwischenelement durch eine oder mehrere Positionierungs- und Stützmittel (21c, 21d, 22a, 22b, 23, 31c, 31d) im Gehäuse gehalten wird, wobei dieses oder diese Positionierungs- und Stützmittel (21c, 21d, 22a, 22b, 23, 31c, 31d) vorteilhafterweise im Bereich des einen oder der zwei Endabschnitte (21a, 21b, 31a, 31b) des Innenteils (21, 31) platziert sind.

12. Verfahren zur Wärmebehandlung einer Probe, die folgenden aufeinanderfolgenden Schritten (a) bis (e) umfassend:

  (a) eine Positionierung der Probe in der Kammer (13) des Innenteils (11, 21, 31) der Wärmebehandlungsvorrichtung (10, 20, 30), nach einem der Ansprüche 1 bis 11,
  (b) eine Erhöhung der Temperatur von einer Anfangstemperatur $T_I$ bis zu einer PlateautemperaturTp,
  (c) ein Halten der Temperatur auf der Plateautemperatur $T_P$ während einer Dauer t,
  (d) eine Verringerung der Temperatur von der Plateautemperatur $T_P$ auf eine Endtemperatur $T_F$, und
  (e) die Entnahme der Probe, die nach Abschluss von Schritt (d) erhalten wurde.

13. Verfahren nach Anspruch 12, wobei die Plateautemperatur $T_P$ höher oder gleich 1000 °C ist, vorteilhafterweise höher oder gleich 1500 °C, bevorzugterweise höher oder gleich 1700 °C, und noch bevorzugter höher oder gleich 1800 °C.

14. Verfahren nach Anspruch 12 oder 13, wobei die Dauer t länger als oder gleich 1 h ist, vorteilhafterweise länger als oder gleich 5 h, und bevorzugterweise zwischen 10 h und 1000 h.

15. Verfahren nach einem der Ansprüche 12 bis 14, wobei die Wärmebehandlung eine Sinterung, eine thermochemische Behandlung oder eine thermische Analyse ist, wobei die thermische Analyse beispielsweise aus einer thermogravimetrischen Analyse, einer differentiellen thermischen Analyse oder einer dilatometrischen Analyse ausgewählt ist.

**Claims**

1. Heat treatment device (10, 20, 30), such as an oven, comprising a housing wherein are arranged:

  - a heating resistor (12) made of graphite or silicon carbide, and
  - an inner ceramic part (11, 21, 31) which delimits a volume forming a chamber (13),
  the heating resistor (12) being placed around the inner part (11, 21, 31), **characterised in that** the device (10, 20, 30) further comprises:

    - an intermediate element (14) made of a refractory material selected from a refractory metallic material and a refractory ceramic material,

  the heating resistor (12), the inner part (11, 21, 31) and the intermediate element (14) being coaxial and cylindrical of revolution, the intermediate element (14) being interposed between the heating resistor (12) and the inner part (11, 21, 31) and at a distance from the latter to form a void on either side of the intermediate element (14).

2. Device (10, 20, 30) according to claim 1, wherein the intermediate element (14) has a thickness e which satisfies the following inequation:

$$e < \frac{0.1.\lambda}{h}$$

$\lambda$ and h respectively corresponding to the values of thermal conductivity and overall heat transfer coefficient of the refractory material forming the intermediate element (14), $\lambda$ and h being measured on the refractory material of the intermediate element (14) at a temperature comprised between 100°C and 2000°C and, advantageously, comprised between 1000°C and 1700°C.

3. Device (10, 20, 30) according to claim 1 or 2, wherein the inner part (11, 21, 31) having an outer radius $r_1$ and a length $L_1$ and the intermediate element (14) having an inner radius $r_2$ and a length $L_2$,

  - the ratio $r_2/r_1$ is such that $1 < r_2/r_1 \leq 1.5$, advantageously such that $1 < r_2/r_1 \leq 1.1$, and/or
  - $L_1 = L_2 = L$ and the ratio $L/r_1$ is such that $L/r_1 \geq 1$ and, preferably, such that $L/r_1 \geq 5$.

4. Device (10, 20, 30) according to claim 3, wherein:

- the ratio $r_2/r_1$ is such that $1 < r_2/r_1 \leq 1.05$, and/or
- $L_1 = L_2 = L$ and the ratio $L/r_1$ is such that $L/r_1 \geq 5$.

5. Device (10, 20, 30) according to any one of claims 1 to 4, wherein the refractory metallic material of the intermediate element (14) is formed by a refractory metal or by a refractory metal alloy, the refractory metal(s) being selected from niobium, molybdenum, tantalum, tungsten, rhenium and hafnium, the refractory metallic material advantageously being molybdenum.

6. Device (10, 20, 30) according to any one of claims 1 to 4, wherein the refractory ceramic material of the intermediate element (14) is formed by a carbide, advantageously selected from $B_4C$, TiC and WC, or by a nitride, advantageously selected from BN and TiN.

7. Device (10, 20, 30) according to any one of claims 1 to 6, wherein the housing is placed in an atmosphere comprising an inert gas, preferably argon.

8. Device (10, 20, 30) according to any one of claims 1 to 7, wherein the housing is placed in a reducing atmosphere or in an oxidising atmosphere.

9. Device (10, 20, 30) according to any one of claims 1 to 8, wherein the ceramic of the inner part (11, 21, 31) is selected from alumina, zirconia and mullite.

10. Device (10, 20, 30) according to any one of claims 1 to 9, wherein the device (10, 20, 30) further comprises at least one thermocouple, for example selected from a temperature monitoring thermocouple and a temperature control thermocouple.

11. Device (20, 30) according to any one of claims 1 to 10, wherein the intermediate element is maintained in the housing by one or several positioning and support means (21c, 21d, 22a, 22b, 23, 31c, 31d), this or these positioning and support means (21c, 21d, 22a, 22b, 23, 31c, 31d) being advantageously located at one or both end portions (21a, 21b, 31a, 31b) of the inner part (21, 31).

12. Method of heat treatment of a sample comprising the following successive steps (a) to (e):

    (a) placing the sample in the chamber (13) of the inner part (11, 21, 31) of the heat treatment device (10, 20, 30) according to any one of claims 1 to 11,
    (b) raising the temperature from an initial temperature $T_I$ to a set temperature $T_P$,
    (c) maintaining the temperature at the set temperature $T_P$ for a period t,
    (d) lowering the temperature from the set temperature $T_P$ to a final temperature $T_F$, and
    (e) removing the sample as obtained in step (d).

13. Method according to claim 12, wherein the set temperature $T_P$ is greater than or equal to 1000°C, advantageously greater than or equal to 1500°C, preferably greater than or equal to 1700°C and, even more preferably, greater than or equal to 1800°C.

14. Method according to claim 12 or 13, wherein the period t is greater than or equal to 1 h, advantageously greater than or equal to 5 h and, preferably, comprised between 10 h and 1000 h.

15. Method according to any one of claims 12 to 14, wherein the heat treatment is sintering, thermochemical treatment or thermal analysis, the thermal analysis being for example selected from thermogravimetric analysis, differential thermal analysis or dilatometric analysis.

FIG. 1

FIG. 2

FIG. 3

FIG. 4A

FIG. 4B

FIG. 5A

FIG. 5B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003057615 A1
- WO 2015037408 A1
- WO 2004079284 A1